# FASCICULE DE BREVET EUROPEEN

(11) **EP 3 844 869 B1**
(45) Date de publication et mention de la délivrance du brevet: **04.10.2023**
(21) Numéro de dépôt: 19783432.8
(22) Date de dépôt: 30.08.2019
(51) Int. Cl.: H02S 40/34, H02S 40/36, H02S 20/23

(54) **INSTALLATION PHOTOVOLTAÏQUE**
FOTOVOLTAIKANLAGE
PHOTOVOLTAIC PLANT

(30) Priorité: 30.08.2018 FR 1857825
(43) Date de publication de la demande: 07.07.2021
(73) Titulaire: TOTAL SE, 92400 Courbevoie (FR)
(72) Inventeur: CASSAGNE, Valérick, 91470 Limours (FR); LEROY, Frédéric, 94300 Vincennes (FR)
(74) Mandataire: Croonenbroek, Thomas Jakob
(86) Numéro de dépôt international: PCT/EP2019/073202
(87) Numéro de publication internationale: WO 2020/043876

(56) Documents cités:
- EP-A1- 2 495 767
- US-A1- 2010 132 305
- US-A1- 2018 219 509

## Description

La présente invention se rapporte à une installation photovoltaïque, convertissant le rayonnement solaire en électricité, et plus particulièrement à la protection des câblages de telles installations. Le document EP 2 495 767 A1 décrit une telle installation photovoltaïque.

Les installations photovoltaïques permettent un apport électrique renouvelable, sans production de dioxyde de carbone et sans consommation de carburant fossile. Les seuls coûts engendrés par une installation photovoltaïque pour l'utilisateur sont le prix de fabrication, le prix d'installation et le coût des divers entretiens.

La baisse de ces coûts rend le photovoltaïque de plus en plus compétitif lorsqu'il est comparé aux autres modes de génération d'électricité.

Les coûts de fabrication sont réduits essentiellement par la conception des modules photovoltaïques de l'installation : leur mode de fabrication, les matériaux utilisés, le type de cellules photovoltaïques utilisé, leur câblage etc. Le choix de la structure portante des modules, sa conception et ses dimensions permettent aussi de réduire le prix de l'installation photovoltaïque. Dans une moindre mesure, le choix des câblages, leur matériau et disposition contribue aussi à réduite le prix d'achat.

A ce jour, on souhaite mieux exploiter des surfaces de bâtiments industriels ou commerciaux existants, notamment en installant des modules photovoltaïques sur les toits de ceux-ci. En effet, pour l'exploitant du bâtiment, la génération de l'énergie électrique peut engendrer un revenu supplémentaire ou une économie et contribuer à favoriser l'exploitation économique du bâtiment.

Cependant, ces bâtiments commerciaux ou industriels sont souvent construits avec par exemple une ossature métallique ou en bois qui est dimensionnée pour répondre juste aux contraintes techniques en termes de charge pour supporter le toit avec une isolation ainsi qu'une charge de neige par exemple en fonction de la région de construction.

Or, du fait de leur poids, il n'est aujourd'hui pas possible d'installer certains modules photovoltaïques sur le toit de certains bâtiments pour ne pas contrevenir aux normes techniques en vigueur. En effet, la plupart des modules photovoltaïques connus présentent généralement une face avant en verre et un cadre support métallique de sorte qu'un seul panneau photovoltaïque pèse souvent plus de 12 kg/m2, voire 25 kg/m2 pour certains modèles. Si on y ajoute de plus les structures de support qui sont nécessaires à l'installation des modules photovoltaïques, on arrive à une charge supplémentaire de 3 à 15 kg/m² pour un toit.

Ainsi, on est privé d'équiper de modules photovoltaïques de grandes surfaces aujourd'hui disponibles, notamment des bâtiments anciens du fait de leur dimensionnement limité en termes de charge.

Pour pallier à cet inconvénient, on connaît des modules photovoltaïques légers ou souples encapsulés en résine laminée dont le prix de revient est réduit qui peuvent être fixés directement sur la surface à exploiter.

Or, à ce jour, les câbles reliant les modules photovoltaïques entre eux ainsi que les boitiers de jonction sont généralement disposés sur la face arrière des modules photovoltaïques, et souvent intégrés dans des chemins de câbles ou des gaines d'une structure de support des modules photovoltaïques et ainsi protégés des intempéries, des variations climatiques et du rayonnement UV. En effet, une telle protection est nécessaire car les rayonnements ultraviolets par exemple peuvent rendre les polymères poreux et fragiles.

Or, quand les modules photovoltaïques légers ou souples sont par exemple directement fixés sur le toit d'un bâtiment commercial ou industriel, tous les câblages et les boitiers de jonctions ne peuvent plus être à l'arrière du module photovoltaïque, mais doivent être placés sur l'avant et sont donc exposés aux intempéries et au rayonnement UV.

Il est donc nécessaire de prévoir une protection des câblages et des boîtiers de jonction qui puisse être efficace tout en permettant une installation ou une maintenance aisée.

Afin de résoudre au moins partiellement les problèmes précédemment mentionnés, l'invention a pour objet une installation photovoltaïque pour la génération d'énergie électrique comprenant :
- au moins un module photovoltaïque, comportant des cellules photovoltaïques connectées à au moins une boîte de jonction disposée sur une face avant du module photovoltaïque, face par laquelle entrent les rayons solaires, à proximité d'un bord périphérique dudit module photovoltaïque,
- au moins un câble de courant continu acheminant le courant généré par l'au moins un module photovoltaïque,
caractérisée en ce qu'elle comporte en outre :
- un fourreau de protection, fixé sur la face avant du module photovoltaïque, entourant la boîte de jonction et l'au moins un câble de courant continu, destiné à être placé le long du bord périphérique du module photovoltaïque proche de la au moins une boîte de jonction, ledit fourreau de protection présentant une section dont la hauteur correspond au moins à la hauteur de la boîte de jonction et comportant une fenêtre située sur la face du fourreau de protection en contact avec le module photovoltaïque par laquelle la boîte de jonction fait saillie dans le fourreau, et une ouverture longitudinale refermable permettant d'accéder à la boîte de jonction et à l'au moins un câble de courant continu.

Le fourreau de protection forme une protection supplémentaire pour les câbles et les boîtes de jonction. L'ouverture longitudinale refermable permet un accès facile et rapide aux câbles et aux boîtes de jonction, tandis que son installation est aisée. La section du fourreau correspondant approximativement en hauteur aux boîtes de jonction permet en outre de minimiser l'ombre projetée par le fourreau sur les cellules photovoltaïques.

Le fourreau protège les câbles de l'eau, en diminuant la quantité d'eau tombant directement sur les câbles, et en empêchant la stagnation d'eau. En effet, le fourreau de protection guide l'eau et favorise son écoulement.

L'installation photovoltaïque selon l'invention peut en outre comporter une ou plusieurs des caractéristiques suivantes, prises seules ou en combinaison.

Le fourreau peut être au moins partiellement réalisé en matériau polymère ou en fibres organiques, notamment parmi les suivants : EPDM, PVC ou chlorofibre, un fluoropolymère, du polysilicone, polyester, polyamide, polypropylène, polyéthylène, élasthanne, aramide.

L'ouverture longitudinale refermable peut être formée par deux rabats superposés à l'état fermé de l'ouverture longitudinale refermable.

Les rabats peuvent comporter des bandes pour l'un de boucles textiles, et pour l'autre de crochets textiles, formant, lorsque les rabats sont superposés, une fermeture mécanique de l'ouverture longitudinale refermable.

L'ouverture longitudinale refermable peut être formée par deux rabats comportant à leur extrémité libre des lèvres en contact à l'état fermé de l'ouverture longitudinale refermable.

Le fourreau de protection peut comporter une armature formant des moyens élastiques qui ramènent l'ouverture longitudinale refermable à l'état fermée en l'absence d'action extérieure.

Le fourreau de protection peut être réalisé en matériau élastique ayant un état de moindre déformation dans lequel l'ouverture longitudinale refermable est à l'état fermé.

Le fourreau de protection peut être réalisé en deux parties : un fond à section ouverte sur la face opposée au module photovoltaïque, portant les fenêtres, et un couvercle fermant le fourreau de protection par emboîtement avec le fond à section ouverte.

Le fourreau de protection peut présenter une section rectangulaire.

Le protection de protection peut être composé de plusieurs segments longitudinaux, un segment étant associé à un module photovoltaïque et comportant une fenêtre pour la boîte de jonction du module photovoltaïque auquel il est associé.

Chaque segment peut comporter à une extrémité une portion amincie destinée à coopérer avec une portion élargie d'un segment voisin.

Le fourreau de protection est fermé à au moins une de ses extrémités longitudinales par un bouchon de forme complémentaire à la section du fourreau à l'état fermé de l'ouverture longitudinale refermable.

Un des bouchons peut comporter au moins un passage pour l'au moins un câble de courant continu.

La paroi inférieure du fourreau de protection en contact avec un module photovoltaïque peut comporter au moins une ouverture d'écoulement pour l'écoulement d'eau de pluie tombant sur la surface des modules photovoltaïques.

D'autres avantages et caractéristiques apparaîtront à la lecture de la description de l'invention, ainsi que des figures suivantes parmi lesquelles :
- la figure 1 montre schématiquement en perspective une installation photovoltaïque selon l'invention,
- la figure 2a montre séparément un module photovoltaïque de l'installation de la figure 1, avec ses câblages apparents et une boîte de jonction duopole,
- la figure 2b montre séparément un module photovoltaïque de l'installation de la figure 1, avec ses câblages apparents et deux boîtes de jonction monopole,
- la figure 2c montre séparément une boîte de jonction et les câbles de courant continu associés à celle-ci,
- les figures 3a, 3b sont des vues en coupe d'une portion inférieure du module de la figure 2a avec un fourreau,
- la figure 4a montre schématiquement en perspective un fourreau pour la protection des câblages de la figure 2a,
- la figure 4b montre schématiquement en perspective un fourreau pour la protection des câblages de la figure 2b,
- les figures 5 à 8 montrent en coupe différents modes de réalisation de fourreau,
- les figures 9 à 11 illustrent la mise en place d'une installation selon un mode de réalisation de l'invention,
- les figures 12a et 12b illustrent une possibilité de fermeture des extrémités du fourreau avec un câblage modulaire,
- les figures 13 et 14 illustrent un mode de réalisation modulaire du fourreau, en vue de dessous et en coupe respectivement,
- les figures 15 et 16 illustrent un mode de réalisation à fenêtre d'écoulement.

Sur les figures, les éléments identiques sont identifiés par les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

Dans la description, certains éléments ou paramètres sont indexés, par exemple par l'adjonction du qualificatif "premier" ou "second", "premier", "suivant" ou "dernier" ou par une lettre ou un chiffre etc. Cette indexation vise à différentier les éléments entre eux, et n'indique aucun ordre de préférence ou de chronologie d'installation.

Par exemple, de façon générale, un module photovoltaïque porte le numéro de référence 1, tandis qu'un module photovoltaïque spécifique sera désigné par 1a, 1b ou 1c.

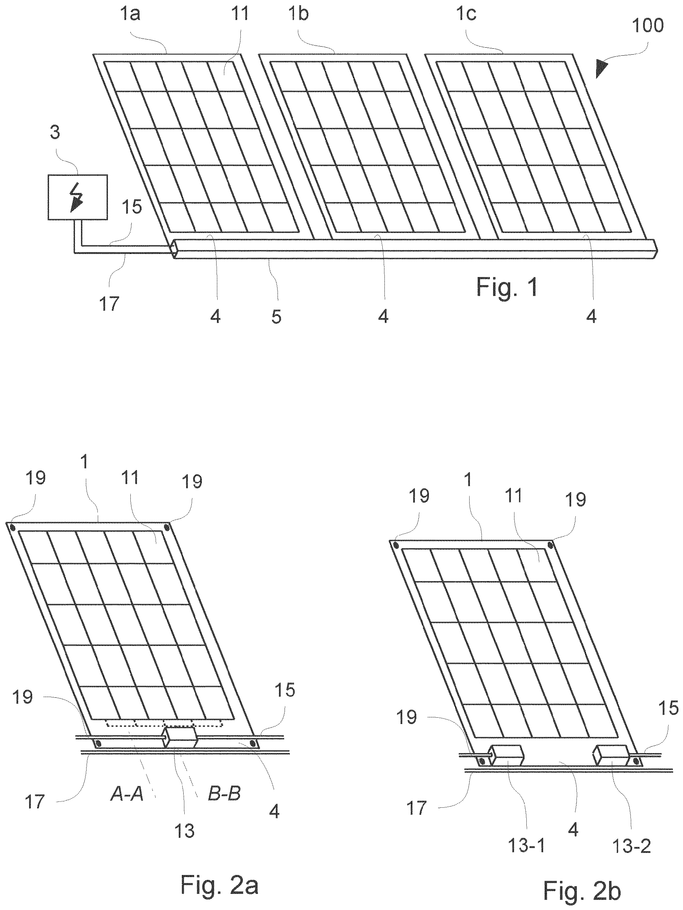

La figure 1 est une représentation schématique de l'installation photovoltaïque 100 selon l'invention, vue en perspective. L'installation 100 de la figure 1 comporte par exemple trois modules photovoltaïques 1 (1a, 1b, 1c), reliés à une jonction de réseau 3, par exemple un réseau électrique domestique, le réseau électrique public ou bien un accumulateur.

Les modules photovoltaïques 1 sont par exemple fixés directement sur un toit, une structure portante ou bien un terril. Les modules 1 sont par exemple interconnectés en série de sorte à former une chaîne (également appelée "string" en anglais) au moyen de câbles de courant continu 15, 17 acheminant le courant produit par chacun des modules 1 de la chaîne à la jonction de réseau 3.

Par convention, le premier module 1a de la chaîne est le plus proche de la jonction de réseau 3, et le dernier module 1c est le module le plus éloigné de la jonction de réseau 3.

Les trois modules 1a, 1b, 1c sont disposés en alignement horizontal, définissant ainsi un axe longitudinal le long duquel ils sont connectés en série ou chaîne. Le long d'un de leurs bords périphériques, dans le présent cas leur bord périphérique inférieur 4 s'étend longitudinalement un fourreau de protection 5 ici en particulier rectiligne dans sa direction longitudinale.

Le fourreau de protection 5 entoure les câbles de courant continu 15, 17 et les boitiers de jonction 13. Il s'étend parallèlement au bord périphérique inférieur 4 des modules photovoltaïques 1 le long de la totalité de l'installation photovoltaïque 100.

La figure 2a montre séparément un module photovoltaïque 1, sans le fourreau de protection 5. Le module photovoltaïque 1 comporte un arrangement de cellules photovoltaïques 11, disposées en rangées parallèles et reliées par des contacts électriques. Les cellules photovoltaïques 11 sont par exemple des cellules souples monocristallines de silicium, reliées par des contacts en aluminium ou argent. Les cellules photovoltaïques 11 peuvent notamment être laminées entre deux couches de résine d'encapsulation, avec une couche protectrice transparente en face avant, c'est-à-dire la face par laquelle entrent les rayons du soleil.

Le module 1 comporte une boîte de jonction 13, dans le présent exemple une boîte de jonction duopole, sur sa face avant, à proximité du bord périphérique inférieur 4, de forme sensiblement parallélépipédique, notamment avec des bords arrondis. La boîte de jonction 13 est reliée aux cellules photovoltaïques par des contacts électriques, par exemple du même type que ceux reliant les cellules 11 entre elles.

Parmi les câbles de courant continu 15, 17, on peut notamment distinguer :
- des câbles de connexion 15 intermodules reliant deux boîtes de jonction 13 de deux modules photovoltaïques adjacents, par exemple 1a et 1b ou 1b et 1c, ou la jonction de réseau 3 à la boîte de jonction 13 du premier module photovoltaïque 1a,
- un câble de retour 17, qui relie la boîte de jonction 13 du dernier module photovoltaïque à la jonction de réseau 3, ce câble de retour 17 courant en parallèle aux câbles de connexion 15 le long de la totalité de l'installation dans le fourreau de protection 5.

La boîte de jonction 13 et le câble de connexion 15 comportent avantageusement des fiches et prises complémentaires pour un assemblage rapide. Le câble de retour 17 relie le pôle positif de la dernière boîte de jonction 13 au pôle positif de la jonction de réseau 3.

Les câbles de connexion 15 et de retour 17 formant les câbles de courant continu 15, 17 peuvent notamment être fixés par coopération de forme aux pôles qu'ils relient, par exemple au moyen de fiches et prises complémentaires pour permettre une mise en place rapide.

D'autres arrangements de câbles de courant continu 15, 17 sont cependant aussi possibles, avec notamment une connexion en parallèle des boîtes de jonction 13. Une telle interconnexion des boîtes de jonction 13 permet de privilégier le courant produit au détriment de la tension fournie.

Des arrangements combinant des boîtes de jonction 13 en parallèle et en série sont aussi possibles pour adapter courant et tension en sortie de l'installation photovoltaïque.

Parmi des variantes possibles, on a représenté sur la figure 2b séparément un module photovoltaïque de l'installation de la figure 1, avec ses câblages apparents et deux boîtes de jonction monopole 13-1 et 13-2 disposés aux extrémités latérales du bord périphérique 4.

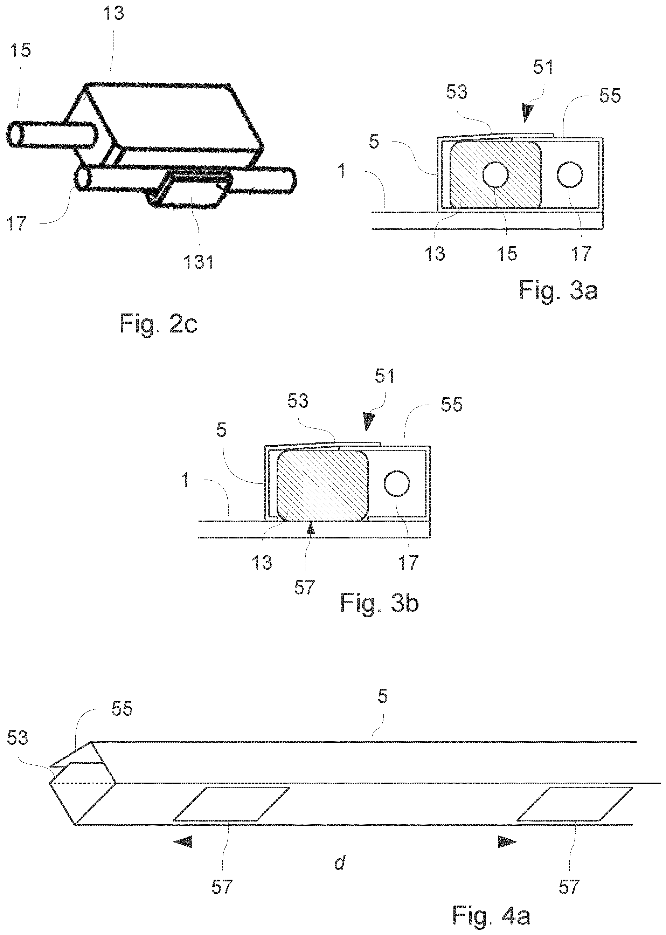

Un exemple d'une boîte de jonction 13, monopole ou duopole, et les câbles de courant continu 15, 17 sont représentés plus en détail en figure 2c. En figure 2c la boîte de jonction 13 est représentée en perspective. La boîte de jonction 13 est parallélépipédique, avec de chaque côté perpendiculaire au bord périphérique 4 le long duquel elle est disposée un câble de connexion 15 connecté à elle.

Du côté de la boîte de jonction 13 faisant face au bord périphérique 4 proche s'étend un câble de retour 17 séparé. Le câble de retour 17 peut en alternative être disposé du côté opposé de la boîte de jonction 13 ou bien, dans le cadre d'une structure modulaire, être combiné au câble de connexion 15, qui comporte alors deux lignes parallèles. La boîte de jonction 13 comporte ici en particulier un crochet 131 pour maintenir le câble de retour 17 sur sa face orientée vers le bord périphérique 4 le long duquel elle est disposée.

Le module 1 comporte en outre des moyens de fixation 19 (figure 2a), par exemple des perçages permettant un vissage, un accrochage ou une attache rapide à une structure portante dédiée ou bien des appuis fixés à un toit ou un terril. Selon d'autres modes de réalisation, les modules photovoltaïques sont fixés par collage sur la structure portante.

Sur les figures 3a et 3b est représenté selon une vue en coupe transversale un premier exemple de réalisation d'un fourreau de protection 5.

Ce fourreau de protection 5 est monté et fixé de sorte à entourer la boîte de jonction 13 et les câbles de connexion 15 et de retour 17.

En figure 3a, le plan de coupe est le plan perpendiculaire au plan du module et au bord inférieur 4 du module 1 passant par la ligne A-A qui est située à gauche d'une boîte de jonction 13.

En figure 3b, le plan de coupe est le plan perpendiculaire au plan du module et au bord inférieur du module 1 passant par la ligne B-B qui est située au milieu de la boîte de jonction 13.

Dans cet exemple de réalisation, le fourreau de protection 5 est de section rectangulaire, avec une hauteur correspondant au moins ou exactement à la hauteur de la boîte de jonction 13. Il contient donc et entoure ladite boîte de jonction 13 ainsi que les câbles de connexion 15 et de retour 17, représentés par leur profil ou leur section : rectangulaire à bords arrondis pour la boîte de jonction 13, circulaire pour les câbles 15, 17.

Le fourreau de protection 5 peut être rigide ou souple. Il est par exemple au moins partiellement réalisé en matériau polymère ou en fibres organiques, notamment parmi les suivants : EPDM, PVC ou chlorofibre, un fluoropolymère, du polysilicone, polyester, polyamide, polypropylène, polyéthylène, élasthanne, voire aramide. Le fourreau de protection 5 peut en alternative être en fils de polyamide tressé. En particulier, son étanchéité n'a pas besoin d'être totale, puisqu'il a comme but principal d'arrêter les rayons ultraviolets du soleil. Au contraire, une étanchéité partielle peut même réduire l'accumulation d'humidité pour de longues périodes.

Si le fourreau de protection 5 est réalisé en polymères isolants, un fil abimé dont l'âme serait en contact avec ledit fourreau de protection 5 ne rend alors pas sa manipulation ou son contact dangereux pour un intervenant humain.

En adaptant la hauteur du fourreau de protection 5 à celle de la boîte de jonction 13, l'ombre projetée par celui-ci sur les cellules photovoltaïques 11 est réduite, ce qui permet de maintenir un rendement élevé de l'installation 100 malgré une installation de câble et des boîtes de jonction 13 sur la face avant des modules photovoltaïques 1.

Le fourreau de protection 5 comporte une ouverture longitudinale 51 qui s'étend préférentiellement sur toute sa longueur et qui est refermable. Dans le présent exemple, cette ouverture longitudinale 51 est disposée sur sa face opposée au module 1, ici fermée par un premier 53 et un deuxième 55 rabat. Le premier rabat 53 vient se rabattre sur le deuxième rabat 55 pour fermer ladite ouverture 51. Les rabats 53, 55 peuvent notamment se rabattre en position fermant l'ouverture longitudinale refermable 51 sous l'action d'un retour à un état de moindre déformation du matériau élastique qui compose le fourreau de protection 5. En addition ou en alternative, le fourreau de protection 5 peut comporter une armature élastique, par exemple en acier ressort ou en plastique élastique, qui forme des moyens élastiques assurant le retour à l'état fermé de l'ouverture longitudinale refermable 51 en l'absence d'action extérieure.

Le premier rabat 53 est alors avantageusement situé du côté en haut lorsque le module 1 est considéré incliné ou vertical, pour permettre une meilleure évacuation d'eau de pluie en dehors du fourreau de protection 5.

Sur la face du fourreau de protection 5 située en contact avec la face avant du module photovoltaïque 1 à l'état monté est située une fenêtre 57 pour chaque boîte de jonction 13, au niveau des positions longitudinales desdites boîtes de jonctions 13, par lesquelles les boîtes de jonction 13 font saillie dans le fourreau de protection 5. Une telle fenêtre 57 est notamment visible uniquement en figure 3b, correspondant à une coupe au niveau de la position d'une boîte de jonction 13 et donc à hauteur d'une fenêtre 57 et à la boîte de jonction 13 dont le profil est visible en figures 3a et 3b.

Le fourreau de protection 5 peut aussi être fixé sur la face avant des modules 1, par exemple par collage, par vissage, par rivetage ou par coopération de forme ("clipsage").

Les fenêtres 57 et l'ouverture longitudinale refermable 51 sont situées sur des faces différentes, ici opposées. Les fenêtres 57 sont en particulier de forme et dimensions correspondant aux boîtes de jonction 13, de sorte à permettre leur passage dans le fourreau de protection 5. L'ouverture longitudinale refermable 51 permet un accès rapide aux boîtes de jonction 13 et aux câbles 15, 17 que contient et protège le fourreau de protection 5 à l'état fermé de ladite ouverture longitudinale refermable 51.

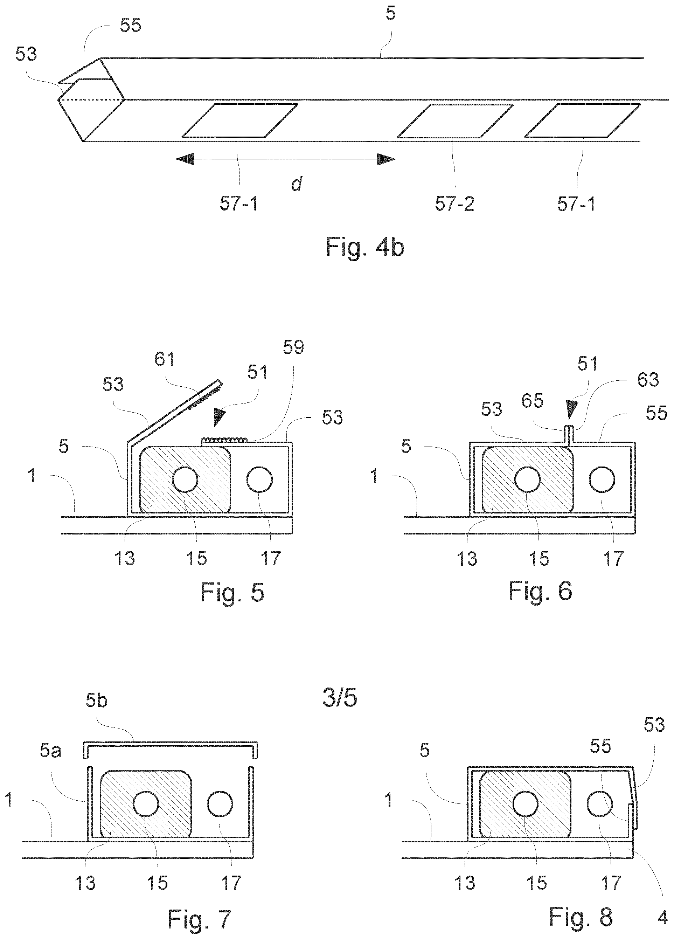

Le fourreau de protection 5 est représenté en perspective en vue de dessous (depuis l'emplacement normalement occupé par le module photovoltaïque 1) en figure 4a pour des modules représentés sur la figure 2a et en figure 4b pour les modules représentés sur la figure 2b.

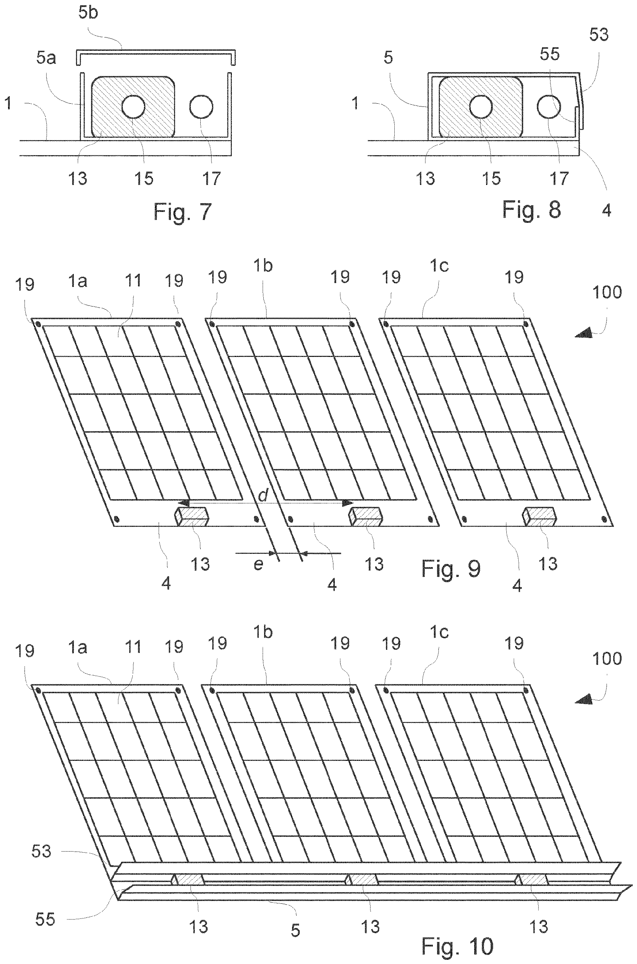

On peut notamment voir en figure 4a respectivement 4b que les fenêtres 57 respectivement 57-1 et 57-2 sont disposées à une distance d correspondant à la distance entre deux boîtes de jonction 13 (duopoles) respectivement 13-1 et 13-2 (monopoles) de deux modules 1 successifs de l'installation photovoltaïque 100 (voir figure 9).

Le fourreau 5 est notamment tenu par l'emboîtement des fenêtres 57 respectivement 57-1 et 57-2 sur les boîtes de jonction 13 respectivement 13-1 et 13-2 et le passage des câbles 15 et 17 dans le fourreau 5.

Les figures 5 à 8 illustrent des modes de réalisation alternatifs d'ouverture longitudinale refermable 51, avec un mode de représentation analogue à celui des figures 3a, 3b.

En figure 5, l'ouverture longitudinale refermable 51 est formée de deux rabats 53, 55, comportant en outre des bandes de boucles 59 et crochets textiles 61, formant à l'état fermé une attache réversible de type "scratch."

En figure 6, l'ouverture longitudinale refermable 51 est formée de deux rabats 53, 55 prolongée par deux lèvres extrémales 63, 65, respectivement à l'extrémité libre du premier et du deuxième rabat 53, 55, en contact compressé lorsque ladite ouverture 51 est à l'état fermé.

En figure 7, le fourreau de protection 5 est formée de deux parties longitudinales. Il comporte notamment un fond 5a, à section ouverte sur la face opposée au module photovoltaïque 1, et un couvercle 5b fermant le fourreau de protection 5 par emboîtement avec le fond 5a à section ouverte qu'il vient fermer.

En figure 8, le fourreau de protection 5 comporte l'ouverture longitudinale refermable 51 sur la face orientée vers le bord périphérique 4, ce qui peut être avantageux quand ledit bord périphérique 4 est un bord inférieur : l'écoulement d'eau à travers ladite ouverture 51 est alors réduit tandis que l'écoulement d'eau depuis l'intérieur du fourreau de protection 5 est augmenté. A l'inverse, si le bord périphérique 4 est un bord supérieur, l'ouverture longitudinale refermable 51 peut être disposée sur la face opposée, faisant face aux cellules photovoltaïques 11.

Un fourreau de protection 5 tel que décrit précédemment est notamment léger, permet de couvrir et protéger les câbles de courant continu 15, 17, les connecteurs 18 (pas visibles sur la figure 8) ainsi que les boîtes de jonction 13, tout en permettant un accès facile et rapide à ceux-ci lors d'un entretien ou une vérification de l'état des composants de l'installation photovoltaïque 100.

Les figures 9 à 11 et 12a, 12b illustrent le procédé de mise en place de l'installation photovoltaïque 100, par exemple sur un toit ou terrain incliné.

La première étape représentée en figure 9 est la disposition en alignement des modules photovoltaïques 1, avec un écart e entre deux modules consécutifs (e pouvant notamment être nul) assurant une distance d entre les boîtes de jonction 13 de deux modules photovoltaïques 1 consécutifs. Les modules photovoltaïques 1 sont en particulier fixés par leurs moyens de fixation 19 au support (ici le toit ou terrain incliné), au moyen de vis, attaches ou crochets ou par collage.

La deuxième étape représentée en figure 10 est la disposition et la fixation du fourreau de protection 5 le long des bords périphériques 4 alignés à proximité des boîtes de jonction 13, avec lesdites boîtes de jonction 13 faisant saillie dans les fenêtres 57. La fixation du fourreau de protection 5 peut notamment être effectuée par collage. Dans le cas de la figure 10, le fourreau de protection 5 est à niveau avec une rangée de moyens de fixation 19 des modules 1, et peut donc être fixé par ceux-ci.

La troisième étape est la connexion des modules photovoltaïques 1 entre eux et à la jonction de réseau courant continu ou au convertisseur de puissance3, au moyen des câbles de courant continu 15 et 17. Pour ce faire, les câbles de connexion 15 sont disposés entre les boîtes de jonction 13 successives des modules 1a, 1b, 1c de la chaîne, par exemple, la première boîte de jonction 13 étant reliée par son pôle négatif à un pôle négatif de la jonction de réseau 3, et le câble de retour 17 est disposé entre le pôle positif de la dernière boîte de jonction 13 et le pôle positif de la jonction de réseau 3.

L'ouverture longitudinale refermable 51 est alors refermée, et l'installation est prêtre à fonctionner.

Lors d'une vérification ou d'un entretien, un intervenant n'a qu'à ouvrir l'ouverture longitudinale refermable 51 pour accéder aux câbles de courant continu 15, 17 et aux boîtes de jonction 13, par exemple pour contrôler l'état des équipements ou pour mesurer la tension aux bornes d'une boîte de jonction 13 afin de déterminer quelle section de câble de courant continu 15, 17 ou quel module photovoltaïque 1 doit être remplacé.

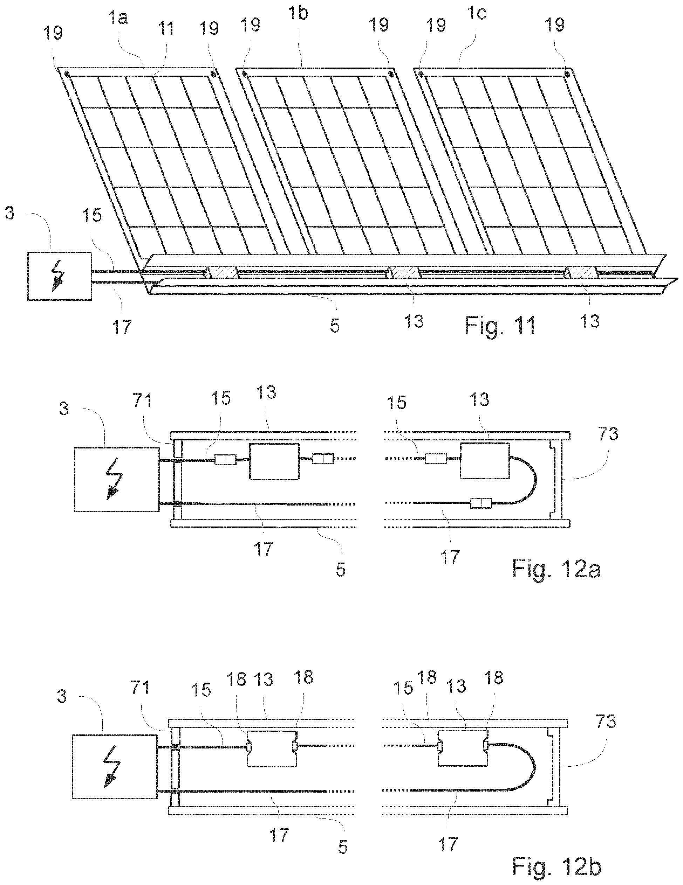

Pour fermer plus complètement le volume délimité par le fourreau de protection 5, en particulier aux objets extérieurs (feuilles, gravier, insectes et animaux etc.) des bouchons 71, 73 de section correspondant à celle du fourreau de protection 5 à l'état fermé peuvent être disposés et fixés aux extrémités longitudinales du fourreau de protection 5, comme représenté en figures 12a, 12b. Avantageusement, ces bouchons 71, 73 comportent des passages de câble, des raccordements à d'autres gaines ou chemin de câble ou des prises ou fiches pour les câbles de courant continu 15, 17. Ils peuvent notamment être collés, agraffés ou cousus aux extrémités.

Dans le cadre d'une structure modulaire, d'assemblage rapide et simple, les câbles de connexion 15 et de retour 17 sont pourvus de connecteurs 18, par exemple des fiches et prises s'emboîtant et maintenant ainsi un contact électrique, notamment par coopération de forme. En particulier, les connecteurs 18 peuvent relier les portions de câble de courant continu 15, 17 de façon réversible, pour permettre un remplacement rapide.

Dans le cas de la figure 12a, une portion des câbles de courant continu 15, 17 est reliée de façon fixe aux boîtes de jonction 13, et des connecteurs sont prévus entre les boîtes de jonction 13 consécutives.

Dans le cas de la figure 12b, les connecteurs sont intégrés dans les boîtes de jonction 13, en particulier sous forme de fiches femelles affleurant au niveau des côtés desdites boîtes de jonction 13, de sorte à maintenir un contour rectangulaire permettant l'insertion des boîtes de jonction 13 dans les fenêtres 57 elles même rectangulaires.

Les câbles de courant continu 15, 17 et les boîtes de jonction 13 sont alors reliés par les connecteurs 18 de façon simple, rapide et réversible. L'assemblage de l'installation 100 est alors plus rapide et potentiellement moins coûteux, tandis que la maintenance et en particulier le remplacement de composants (module 1a, 1b, segment de câble etc.) est alors simplifié.

En alternative, les extrémités du fourreau de protection 5 peuvent être cousues autour des câbles de courant continu 15,17.

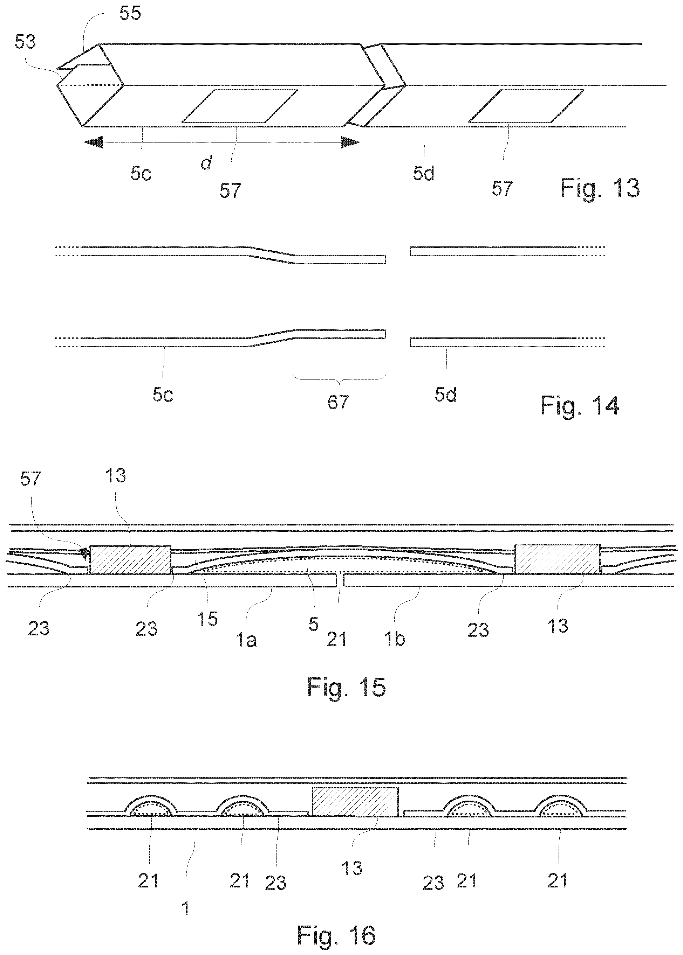

Dans le cadre d'une structure modulaire, ne nécessitant aucune découpe d'une longueur particulière de fourreau de protection 5, ledit fourreau de protection 5 peut être composé de plusieurs segments longitudinaux 5c, 5d..., un segment longitudinal 5c, 5d étant par exemple associé à un module photovoltaïque 1 et comportant une fenêtre 57 (ou deux fenêtres 57-1 et 57-2). Un tel fourreau de protection 5 est représenté en figures 13 et 14.

Chaque segment 5c, 5d comporte à une extrémité une portion amincie destinée à coopérer avec une portion élargie du segment suivant ou précédent dans la chaîne. La figure 14 est une vue en perspective par en-dessous (semblable à la figure 4). Chaque fourreau de protection 5c, 5d présente alors une longueur totale d lorsqu'il est emboîté dans le segment 5d, 5c voisin. L'emboîtement des fourreaux peut aussi se faire par des formes coniques ou des brides ou encore par déformation élastique des embouchures.

En figure 14, les segments sont représentés en coupe, de sorte à rendre apparente une portion amincie 67 du segment 5c considéré, qui s'emboîte dans l'extrémité du segment 5d voisin lors de la mise en place de l'installation 100.

En alternative le fourreau de protection 5 peut se présenter sous forme continue, par exemple sous forme de rouleau à dévider lorsqu'il est suffisamment souple (fils polymères tressés ou une membrane polymère), et notamment sans les fenêtres 57. Pour la mise en place de l'installation 100, il faut alors découper d'une part la longueur de fourreau de protection 5 requise, et d'autre part les fenêtres 57 aux emplacements appropriés. Bien que requérant plus d'étapes, ce procédé d'installation donne plus de liberté quant à la disposition des modules 1.

Les modules légers étant souvent installés dans le sens du rampant des toitures ou de terril, les connexions électriques et fourreaux vont se retrouver perpendiculairement à la pente et donc peuvent faire un barrage à l'écoulement des eaux de pluie. Les figures 15 et 16 illustrent un mode de réalisation de fourreau de protection 5 et d'installation photovoltaïque 100 dans lequel le fourreau de protection 5 comporte des ouvertures d'écoulement 21, traversant le fourreau de protection 5 dans le sens perpendiculaire à son axe longitudinal, au niveau de sa surface inférieure (celle contre le module photovoltaïque 1).

Dans le mode de réalisation de la figure 15, la paroi inférieure du fourreau de protection 5, celle disposée contre les modules photovoltaïques 1a, 1b et formant un fond dudit fourreau de protection 5, est arquée entre les boîtes de jonction 13, tandis que les modules photovoltaïques 1a, 1b sont rectilignes. Ainsi, des ouvertures d'écoulement 21 permettant l'écoulement d'eau de pluie tombant sur la surface du module photovoltaïque 1a, 1b considéré.

Autour des fenêtres 57 par lesquelles sont insérées les boîtes de jonction 13, reliées ensuite par le câble de courant continu 15, le fourreau de protection 5 comporte des cadres 23, sous forme d'une portion rectiligne plane du fond du fourreau de protection 5 disposée contre le module photovoltaïque 1. Les cadres 23 entourent les fenêtres 57, et sont parallèles au module photovoltaïque 1a, 1b de la boîte de jonction 13 qu'ils entourent.

Au niveau des cadres 23, le fourreau de protection 5 peut être collé sur le module 1. En alternative, le fourreau protecteur 5 peut être vissé, riveté ou agrafé au niveau du cadre 23 contre le module photovoltaïque 1a, 1b.

Dans le mode de réalisation de la figure 16, le fourreau de protection 5 comporte plusieurs portions arquées délimitant chacune une ouverture d'écoulement 21 entre deux boîtes de jonction 13 successives.

Les ouvertures d'écoulement 21 permettent ainsi d'éviter la stagnation d'eau au niveau des boîtes de jonction 13, et réduisent ainsi l'encrassement au niveau du fourreau 5 et de son contenu.

Le fourreau de protection 5 peut aussi être non-rectiligne dans sa direction longitudinale, ce qui est aisément obtenu au moyen d'un fourreau de protection 5 en fils de polyamide, polyéthylène ou polyvinyle (ou autre polymères) tressés, par exemple pour relier des modules 1 non-alignés (par exemple dans le cas d'un terril courbé).

La section du fourreau de protection 5 peut aussi être différente d'un rectangle, par exemple lorsqu'il est réalisé en fils de polymères tressés ou en membrane polymère, il sera de section ovaloïde.

Le fourreau de protection 5 permet d'éviter la stagnation et l'accumulation d'eau au niveau des câbles de courant continu 15, 17 en favorisant son évacuation.

L'addition du fourreau de protection 5 permet donc d'augmenter l'espérance de vie en état de fonctionnement de l'installation photovoltaïque 100 en protégeant les câbles de courant continu 15, 17, les connecteurs 18 (figures 12a, 12b) et les boîtes de jonction 13 des modules 1 à jonction en face avant. Son installation est aisée et rapide, tandis qu'il peut être réalisé en matériaux peu coûteux, représentant ainsi un surcoût peu élevé. Il contribue donc à rendre l'énergie photovoltaïque plus efficace et compétitive.

## Revendications

1. Installation photovoltaïque (100) pour la génération d'énergie électrique comprenant :
- au moins un module photovoltaïque (1), comportant des cellules photovoltaïques (11) connectées à au moins une boîte de jonction (13) disposée sur une face avant du module photovoltaïque (1), face par laquelle entrent les rayons solaires, à proximité d'un bord périphérique (4) dudit module photovoltaïque (1),
- au moins un câble de courant continu (15, 17) acheminant le courant généré par l'au moins un module photovoltaïque (1),
**caractérisée en ce qu'**elle comporte en outre :
- un fourreau (5), fixé sur la face avant du module photovoltaïque (1), entourant la boîte de jonction (13) et l'au moins un câble de courant continu (15, 17), destiné à être placé le long du bord périphérique (4) du module photovoltaïque (1) proche de la boîte de jonction (13), ledit fourreau (5) présentant une section dont la hauteur correspond au moins à la hauteur de la boîte de jonction (13) et comportant une fenêtre (57) située sur la face du fourreau (5) en contact avec le module photovoltaïque (1) par laquelle la boîte de jonction fait saillie dans le fourreau (5), et une ouverture longitudinale refermable (51) permettant d'accéder à la boîte de jonction (13) et à l'au moins un câble de courant continu (15, 17).

2. Installation photovoltaïque selon la revendication 1, **caractérisée en ce que** le fourreau (5) est au moins partiellement réalisé en matériau polymère ou en fibres organiques, notamment parmi les suivants : EPDM, PVC ou chlorofibre, un fluoropolymère, du polysilicone, polyester, polyamide, polypropylène, polyéthylène, élasthanne, aramide.

3. Installation photovoltaïque selon l'une des revendications 1 ou 2, **caractérisée en ce que** l'ouverture longitudinale refermable (51) est formée par deux rabats (53, 55) superposés à l'état fermé de l'ouverture longitudinale refermable (51).

4. Installation photovoltaïque selon la revendication 3, **caractérisée en ce que** les rabats (53, 55) comportent des bandes pour l'un de boucles textiles (59), et pour l'autre de crochets textiles (61), formant, lorsque les rabats (53, 55) sont superposés, une fermeture mécanique de l'ouverture longitudinale refermable (51).

5. Installation selon l'une des revendications 1 ou 2, **caractérisée en ce que** l'ouverture longitudinale refermable est formée par deux rabats (53, 55) comportant à leur extrémité libre des lèvres (63, 65) en contact à l'état fermé de l'ouverture longitudinale refermable (51).

6. Installation photovoltaïque selon l'une des revendications précédentes, **caractérisée en ce que** le fourreau (5) comporte une armature formant des moyens élastiques qui ramènent l'ouverture longitudinale refermable (51) à l'état fermée en l'absence d'action extérieure.

7. Installation photovoltaïque selon l'une des revendications 1 à 5, **caractérisée en ce que** le fourreau (5) est réalisé en matériau élastique ayant un état de moindre déformation dans lequel l'ouverture longitudinale refermable (51) est à l'état fermé.

8. Installation photovoltaïque selon l'une des revendications 1 ou 2, **caractérisée en ce que** le fourreau (5) est réalisé en deux parties : un fond (5a) à section ouverte sur la face opposée au module photovoltaïque (1), portant les fenêtres, et un couvercle (5b) fermant le fourreau (5) par emboîtement avec le fond (5a) à section ouverte.

9. Installation selon l'une des revendications précédentes, **caractérisée en ce que** le fourreau (5) présente une section rectangulaire.

10. Installation selon l'une des revendications précédentes, **caractérisée en ce que** le fourreau (5) est composé de plusieurs segments (5c, 5d) longitudinaux, un segment (5c, 5d) étant associé à un module photovoltaïque (1) et comportant une fenêtre (57) pour la boîte de jonction (13) du module photovoltaïque (1) auquel il est associé.

11. Installation photovoltaïque selon la revendication précédente, **caractérisée en ce que** chaque segment (5c, 5d) comporte une extrémité une portion amincie (67) destinée à coopérer avec une portion élargie d'un segment voisin (5d, 5c).

12. Installation photovoltaïque selon l'une des revendications précédentes, **caractérisée en ce que** le fourreau (5) est fermé à au moins une de ses extrémités longitudinales par un bouchon (71, 73) de forme complémentaire à la section du fourreau (5) à l'état fermé de l'ouverture longitudinale refermable (51).

13. Installation photovoltaïque selon la revendication précédente, **caractérisée en ce qu'**un des bouchons (71, 73) comporte au moins un passage pour l'au moins un câble de courant continu (15, 17).

14. Installation photovoltaïque selon l'une des revendications précédentes, **caractérisée en ce que** la paroi inférieure du fourreau (5) en contact avec un module photovoltaïque (1) présente au moins une ouverture d'écoulement (21) pour l'écoulement d'eau tombant sur la surface des modules photovoltaïques (1).

## Patentansprüche

1. Photovoltaikanlage (100) zur Erzeugung elektrischer Energie, die enthält:
- mindestens ein Photovoltaikmodul (1), das Photovoltaikzellen (11) aufweist, die mit mindestens einem Anschlusskasten (13) verbunden sind, der auf einer Vorderseite des Photovoltaikmoduls (1) angeordnet ist, Seite, über die die Sonnenstrahlen eintreten, in der Nähe eines Umfangsrands (4) des Photovoltaikmoduls (1),
- mindestens ein Gleichstromkabel (15, 17), das den vom mindestens einen Photovoltaikmodul (1) erzeugten Strom befördert,
**dadurch gekennzeichnet, dass** sie außerdem aufweist:
- ein Mantelrohr (5), das an der Vorderseite des Photovoltaikmoduls (1) befestigt ist, den Anschlusskasten (13) und das mindestens eine Gleichstromkabel (15, 17) umgibt, dazu bestimmt ist, entlang des Umfangsrands (4) des Photovoltaikmoduls (1) nahe dem Anschlusskasten (13) platziert zu werden, wobei das Mantelrohr (5) einen Querschnitt hat, dessen Höhe mindestens der Höhe des Anschlusskastens (13) entspricht, und ein Fenster (57), das sich auf der Seite des Mantelrohrs (5) in Kontakt mit dem Photovoltaikmodul (1) befindet, über die der Anschlusskasten in das Mantelrohr (5) vorsteht, und eine wiederverschließbare Längsöffnung (51) aufweist, die den Zugang zum Anschlusskasten (13) und zum mindestens einen Gleichstromkabel (15, 17) ermöglicht.

2. Photovoltaikanlage nach Anspruch 1, **dadurch gekennzeichnet, dass** das Mantelrohr (5) zumindest teilweise aus Polymermaterial oder aus organischen Fasern hergestellt ist, insbesondere aus der Gruppe EPDM, PVC oder Chlorfasern, Fluorpolymer, Polysilicon, Polyester, Polyamid, Polypropylen, Polyethylen, Elastan, Aramid.

3. Photovoltaikanlage nach einem der Ansprüche 1 oder 2, **dadurch gekennzeichnet, dass** die wiederverschließbare Längsöffnung (51) von zwei Umschlagklappen (53, 55) gebildet wird, die im geschlossenen Zustand der wiederverschließbare Längsöffnung (51) aufeinander liegen.

4. Photovoltaikanlage nach Anspruch 3, **dadurch gekennzeichnet, dass** die Umschlagklappen (53, 55) Streifen aufweisen, für die eine aus textilen Schlingen (59), und für die andere aus textilen Häkchen (61), die, wenn die Umschlagklappen (53, 55) aufeinander liegen, einen mechanischen Verschluss der wiederverschließbaren Längsöffnung (51) bilden.

5. Anlage nach einem der Ansprüche 1 oder 2, **dadurch gekennzeichnet, dass** die wiederverschließbare Längsöffnung von zwei Umschlagklappen (53, 55) gebildet wird, die an ihrem freien Ende Lippen (63, 65) aufweisen, die im geschlossen Zustand der wiederverschließbaren Längsöffnung (51) in Kontakt sind.

6. Photovoltaikanlage nach einem der vorhergehenden Ansprüche, **dadurch gekennzeichnet, dass** das Mantelrohr (5) eine Armatur aufweist, die elastische Einrichtungen bildet, die die wiederverschließbare Längsöffnung (51) in Abwesenheit einer äußeren Einwirkung in den geschlossenen Zustand zurückbringen.

7. Photovoltaikanlage nach einem der Ansprüche 1 bis 5, **dadurch gekennzeichnet, dass** das Mantelrohr (5) aus einem elastischen Material mit einem geringeren Verformungszustand hergestellt ist, in dem die wiederverschließbare Längsöffnung (51) im geschlossenen Zustand ist.

8. Photovoltaikanlage nach einem der Ansprüche 1 oder 2, **dadurch gekennzeichnet, dass** das Mantelrohr (5) in zwei Teilen hergestellt ist: ein Boden (5a) mit auf der dem Photovoltaikmodul (1) entgegengesetzten Seite offenem Querschnitt, der die Fenster trägt, und ein Deckel (5b), der das Mantelrohr (5) durch Ineinanderstecken mit dem Boden (5a) mit offenem Querschnitt schließt.

9. Anlage nach einem der vorhergehenden Ansprüche, **dadurch gekennzeichnet, dass** das Mantelrohr (5) einen rechteckigen Querschnitt hat.

10. Anlage nach einem der vorhergehenden Ansprüche, **dadurch gekennzeichnet, dass** das Mantelrohr (5) aus mehreren Längssegmenten (5c, 5d) besteht, wobei ein Segment (5c, 5d) einem Photovoltaikmodul (1) zugeordnet ist und ein Fenster (57) für den Anschlusskasten (13) des Photovoltaikmoduls (1) aufweist, dem es zugeordnet ist.

11. Photovoltaikanlage nach dem vorhergehenden Anspruch, **dadurch gekennzeichnet, dass** jedes Segment (5c, 5d) ein Ende mit einem verdünnten Abschnitt (67) aufweist, der dazu bestimmt ist, mit einem verbreiterten Abschnitt eines benachbarten Segments (5d, 5c) zusammenzuwirken.

12. Photovoltaikanlage nach einem der vorhergehenden Ansprüche, **dadurch gekennzeichnet, dass** das Mantelrohr (5) an mindestens einem seiner Längsenden von einem Stopfen (71, 73) komplementärer Form zum Querschnitt des Mantelrohrs (5) im geschlossenen Zustand der wiederverschließbaren Längsöffnung (51) verschlossen wird.

13. Photovoltaikanlage nach dem vorhergehenden Anspruch, **dadurch gekennzeichnet, dass** einer der Stopfen (71, 73) mindestens einen Durchlass für das mindestens eine Gleichstromkabel (15, 17) aufweist.

14. Photovoltaikanlage nach einem der vorhergehenden Ansprüche, **dadurch gekennzeichnet, dass** die untere Wand des Mantelrohrs (5) in Kontakt mit einem Photovoltaikmodul (1) mindestens eine Abflussöffnung (21) für den Abfluss von Wasser hat, das auf die Oberfläche der Photovoltaikmodule (1) fällt.

## Claims

1. Photovoltaic installation (100) for generating electrical energy, comprising:
- at least one photovoltaic module (1), having photovoltaic cells (11) connected to at least one junction box (13) disposed on a front face of the photovoltaic module (1), via which face the solar rays enter, near a peripheral edge (4) of said photovoltaic module (1),
- at least one direct current cable (15, 17) conveying the current generated by the at least one photovoltaic module (1),
**characterized in that** it also has:
- a sheath (5), fastened to the front face of the photovoltaic module (1), surrounding the junction box (13) and the at least one direct current cable (15, 17), intended to be placed along the peripheral edge (4) of the photovoltaic module (1) close to the junction box (13), said sheath (5) having a section of which the height corresponds at least to the height of the junction box (13) and having a window (57) situated on the face of the sheath (5) in contact with the photovoltaic module (1) via which the junction box protrudes into the sheath (5), and a closable longitudinal opening (51) that makes it possible to access the junction box (13) and the at least one direct current cable (15, 17).

2. Photovoltaic installation according to Claim 1, **characterized in that** the sheath (5) is at least partially made of polymer material or organic fibres, notably among the following: EPDM, PVC or chlorofibre, a fluoropolymer, polysilicone, polyester, polyamide, polypropylene, polyethylene, elastane, aramid.

3. Photovoltaic installation according to either of Claims 1 and 2, **characterized in that** the closable longitudinal opening (51) is formed by two flaps (53, 55) that are superposed when the closable longitudinal opening (51) is in the closed state.

4. Photovoltaic installation according to Claim 3, **characterized in** the flaps (53, 55) have strips, on one flap, of textile loops (59) and, on the other flap, of textile hooks (61), forming, when the flaps (53, 55) are superposed, a mechanical closure of the longitudinal opening (51).

5. Installation according to either of Claims 1 and 2, **characterized in that** the closable longitudinal opening is formed by two flaps (53, 55) having, at their free end, lips (63, 65) that are in contact when the closable longitudinal opening (51) is in the closed state.

6. Photovoltaic installation according to one of the preceding claims, **characterized in that** the sheath (5) has a framework forming elastic means that return the closable longitudinal opening (51) to the closed state in the absence of external action.

7. Photovoltaic installation according to one of Claims 1 to 5, **characterized in that** the sheath (5) is made of elastic material having a state of lesser deformation in which the closable longitudinal opening (51) is in the closed state.

8. Photovoltaic installation according to either of Claims 1 and 2, **characterized in that** the sheath (5) is made in two parts: a bottom (5a) with a section that is open on the face opposite the photovoltaic module (1), bearing the windows, and a cover (5b) that closes the sheath (5) by nesting with the bottom (5a) with an open section.

9. Installation according to one of the preceding claims, **characterized in that** the sheath (5) has a rectangular section.

10. Installation according to one of the preceding claims, **characterized in that** the sheath (5) is made up of a plurality of longitudinal segments (5c, 5d), a segment (5c, 5d) being associated with a photovoltaic module (1) and having a window (57) for the junction box (13) of the photovoltaic module (1) with which it is associated.

11. Photovoltaic installation according to the preceding claim, **characterized in that** each segment (5c, 5d) has one end a thinned portion (67) intended to cooperate with an enlarged portion of a neighbouring segment (5d, 5c).

12. Photovoltaic installation according to one of the preceding claims, **characterized in that** the sheath (5) is closed at at least one of its longitudinal ends by a closure member (71, 73) with a shape complementary to the section of the sheath (5) when the closable longitudinal opening (51) is in the closed state.

13. Photovoltaic installation according to the preceding claim, **characterized in that** one of the closure members (71, 73) has at least one passage for the at least one direct current cable (15, 17).

14. Photovoltaic installation according to one of the preceding claims, **characterized in that** the lower wall of the sheath (5) in contact with a photovoltaic module (1) has at least one flow opening (21) for the flow of water falling onto the surface of the photovoltaic modules (1).
